Europäisches Patentamt

European Patent Office

Office européen des brevets

(19)

(11) Publication number: **0 048 170**
**B1**

# EUROPEAN PATENT SPECIFICATION

(45) Date of publication of patent specification: **24.04.85**

(51) Int. Cl.⁴: **G 01 S 13/34, G 01 S 7/40**

(21) Application number: **81304243.9**

(22) Date of filing: **16.09.81**

(54) **Radar ranging system.**

(30) Priority: **17.09.80 GB 8030085**

(43) Date of publication of application:
**24.03.82 Bulletin 82/12**

(45) Publication of the grant of the patent:
**24.04.85 Bulletin 85/17**

(84) Designated Contracting States:
**BE DE FR**

(56) References cited:
**US-A-4 106 020**
**US-A-4 245 221**

**THE RADIO AND ELECTRONIC ENGINEER, vol.
42, no. 7, July 1972, London, GB, TONKIN et al.:
"An application of borrelation to radar
systems", pages 344-348**

(73) Proprietor: **GEC AVIONICS LIMITED
Airport Works
Rochester Kent ME1 2XX (GB)**

(72) Inventor: **Tottle, Kenneth
129 Mount Pleasant Lane Bricket Wood
St. Albans Hertfordshire (GB)**

(74) Representative: **Keppler, William Patrick
Central Patent Department Wembley Office The
General Electric Company, p.l.c. Hirst Research
Centre East Lane
Wembley Middlesex HA9 7PP (GB)**

Courier Press, Leamington Spa, England.

## Description

This invention relates to frequency modulated continuous wave (FMCW) ranging systems.

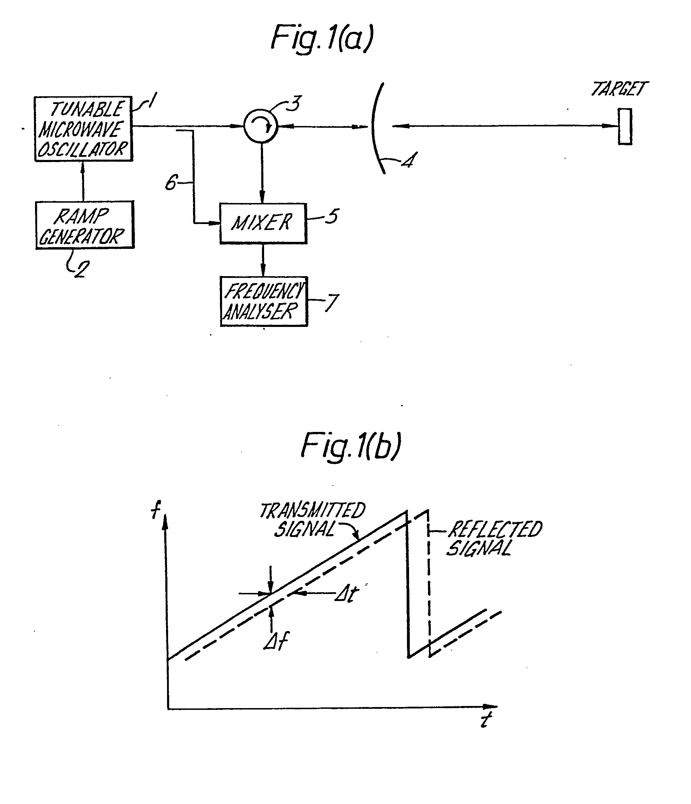

Radar ranging systems commonly employ a frequency modulated continuous wave (FMCW) transmitted signal as an alternative to a pulse system to provide a time marker on the transmitted wave. If the transmitted signal is a microwave frequency swept through a predetermined range repeatedly and linearly, the frequency difference between the transmitted signal and the signal reflected from a target (the radar 'returns') is a measure of the time lapse of the reflected signal and thus of the target range. Thus Figures 1(a) and 1(b) illustrate the basic FMCW Radar in which r.f. transmissions are radiated from an antenna, reflected from an object at a distance d metres, and return to the radar after a time $\Delta t=2d/c$ where c is the velocity of light. The transmitted frequency is made to increase linearly with time so that there is a difference $\Delta f$ between the transmitted frequency and the frequency of reflected signals. $\Delta f$ is proportional to the time delay $\Delta t$ of the reflected signals and to the rate of change of transmitted frequency df/dt.

In order to measure the range, d, it is therefore necessary to measure the difference frequency $\Delta f$ and to know the rate of change of transmitted frequency df/dt. Various methods have been published for controlling df/dt, one such method being described in US Patent Specification 4106020. The method there described corrects the measured value of range by detecting the difference frequency and counting the number of cycles over a period chosen to scale the count appropriately.

There are, however, many difficult applications where the return signals are weak compared with system noise, and multiple returns are present. High resolution filtering is therefore necessary to achieve a good signal to noise ratio and to resolve components from different ranges before the wanted signal can be detected. If this filtering is carried out by a narrowband filter, there is a limitation on the improvement available due to nonlinearity in the transmitter tuning characteristic. Changes in df/dt cause the difference frequency to change, and so the returns from a fixed range will cover a band of frequencies, with a corresponding loss in output signal/noise ratio from a narrowband filter. A method of compensation is therefore required which is applicable before the signals are detected and which therefore enables high resolution filtering at the output.

According to the present invention, a radar ranging system comprises a swept frequency transmitter, difference-frequency circuit means for generating a target difference-frequency signal having frequency components corresponding to the frequency differences between the transmitted signal and respective target return signals, and means for generating a reference difference signal of frequency proportional to the instantaneous frequency difference between the transmitted signal and a version thereof delayed by a predetermined period, characterised in that sampling means clocked by said reference difference signal are arranged to sample said target difference-frequency signal at a non-uniform rate and thereby compensate for non-linear frequency sweep, memory means are coupled to said sampling means for storing the target difference-frequency signal samples and analysing means are coupled to said memory means for analysing said samples on the basis of equal time intervals between them so as to determine the frequency components of the corresponding waveform and hence the true simultaneous ranges of a plurality of targets.

The system may include means for producing an intermediate frequency (I.F.) signal from the outputs of the swept-frequency transmitter and a microwave local oscillator, and a delay line to which the I.F. signal is applied, the resulting delayed I.F. signal being differenced with the undelayed I.F. signal to produce the sampling signal.

Several embodiments of a radar ranging system in accordance with the invention will now be described, by way of example, with reference to the accompanying drawings, of which:

Figure 1 shows a block diagram and associated frequency modulation diagram of a conventional FMCW radar system;

Figure 2 shows a block diagram of a basic radar system according to the invention; and

Figure 3 shows a modification of the system of Figure 2.

The basic system of Figure 1 has already been referred to. It incorporates a voltage tunable microwave oscillator 1, which is swept in frequency by the output of a ramp generator 2. The oscillator output is then applied to a circulator 3 having an output port connected to a transmitting and receiving antenna 4. The radar returns are received by the antenna and fed back to the circulator 3 which passes them on to a receiver including a mixer 5. The transmitted signal from the oscillator 1 normally achieves some leakage from the input port of the circulator 3 to the output port feeding the mixer 5. The leakage portion of the transmitted signal and the reflected signal are mixed in the receiver 5 and a difference frequency signal produced. This leakage is indicated by a path 6.

As explained above, the frequency of this difference signal will depend upon the sweep rate of the transmitted signal and the time lapse between transmission and reception of the reflected signal. If the sweep rate is constant the difference frequency is proportional to the target range. If, however, as is commonly the case, the sweep rate is not constant, the difference frequency will vary throughout the sweep and will therefore not be a good indication of range.

A frequency analyser 7 is employed to measure the difference frequency, since in practice there will generally be returns from a number of different targets and hence the output of the differencing circuits will comprise a number of sine waves of different frequencies. The analyser samples the input signal at a predetermined sampling frequency, quantises the analogue samples and performs a digital analysis to determine the frequency of the signal (if a single frequency) or the frequencies of the components, if derived from a multi-target situation.

Clearly, a non-linear sweep will, since it produces frequency modulation, cause the analyser to indicate the presence of multiple targets when in fact there is only one present.

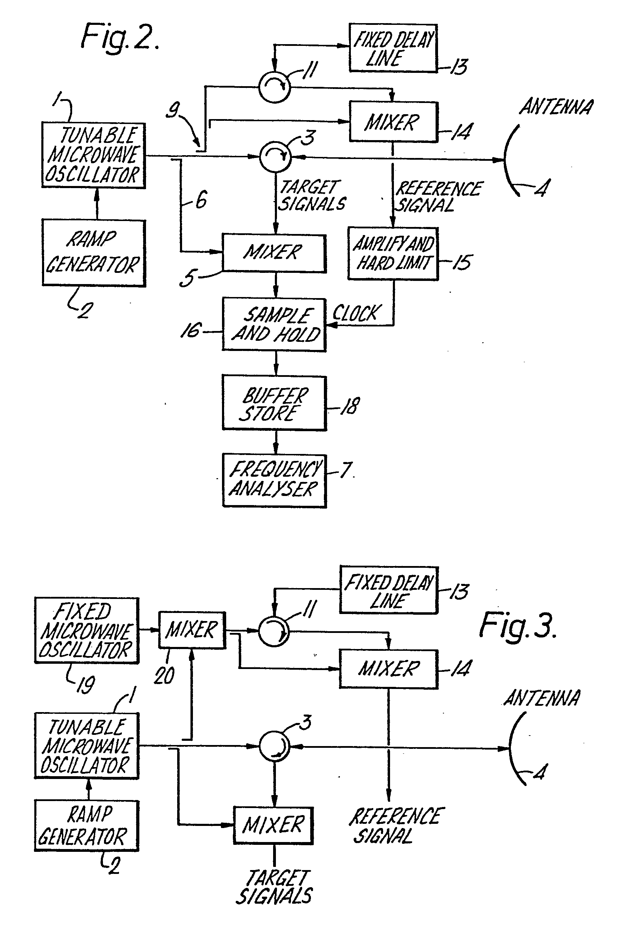

Figure 2 shows a basic embodiment of an FMCW radar incorporating the invention. The same arrangement of oscillator 1, ramp generator 2, circulator 3, antenna 4 and mixer 5 is employed as before. In addition however, to the production of the target difference-frequency signal, by way of the antenna 4 and circulator 3, a reference difference-frequency signal is produced by way of a coupler 9, a circulator 11 and a fixed delay circuit 13.

A portion of the transmitted signal is passed by the coupler 9 to the delay circuit 13 by way of the circulator 11. On reflection to the circulator 11, the delayed signal is applied to a mixer circuit 14 together with a 'leaked' portion of transmitted signal, as for the main mixer 5. The resulting reference difference signal is applied to a circuit 15.

The reference signal has a frequency which, in the same way as for the target difference signal, is dependent upon the sweep rate and the 'range' which is simulated by the delay 13. Since this delay is constant, the reference frequency varies solely in dependence upon the rate of change of frequency of the sweep signal.

On application to the circuit 15, the reference signal is detected, amplified and limited, to produce a 'square' waveform, the transitions of which provide sampling pulses in known manner. The repetition rate of these sampling pulses will then vary in exact correspondence with any departure from linearity of the sweep rate.

The target difference signal is derived by the circulator 3 and mixer 5, and applied to a sample-and-hold circuit 16 which produces an analogue sample at the instant of each sampling pulse from the circuit 15. The sample-and-hold circuit also includes an analogue/digital converter which quantises the analogue samples to produce a series of digital sample values.

Assuming the sweep rate is non-linear these digital samples will arise at a rate which may, for example, increase throughout each sweep. This variation is, however, ignored by supplying them to a buffer store 18 at whatever rate they arise. They are then processed simply as a series of samples of constant time spacing and are analysed accordingly by a frequency analyser 7 to determine the apparent frequencies of the component or components, which are now directly related to target ranges.

Tmf constant sample rate assumed by the analyser 7 in determining the frequency from the sample values may be the average value of the actual sampling rate or may be an arbitrary value which would have the effect of scaling the target difference frequency.

It may be seen that by means of the invention, if the target difference frequency increases throughout the sweep (without any change in target range) the sampling frequency is increased correspondingly so that samples are taken at the same point on the waveform (and thus have the same value) as if the difference frequency had been constant.

It has been assumed above that the delay imposed on the reference signal, although fixed, is arbitrary. This is not so because analysis of a set of samples to determine the waveform(s) from which they arose requires that the samples occur at at least twice the frequency of the highest frequency component. In this case the highest frequency component will arise from the most distant target, i.e. from the upper limit of the range of targets that the system accommodates. Consequently, the reference difference frequency, i.e. the sampling frequency must be obtained from a delay (13) which is at least twice the time lapse corresponding to the upper limit of the target range.

In practice, it is not easy to obtain a significant delay with a microwave signal and one way of overcoming the difficulty is the arrangement of Figure 3. In this arrangement a portion of the swept signal is applied to a mixer 20 which also receives a microwave local oscillator (19) signal of fixed frequency. Thus the whole of the swept signal is shifted to a relatively low frequency band. This intermediate frequency (I.F.) signal is applied to a circulator 11 which passes it to a delay line 13. A significant delay is easily achieved at the low frequency and the reflected signal is mixed with the incident signal in the mixer 14 to provide the same reference difference signal for sampling as before.

In a further alternative, the delay 13 in Figure 2 is accepted at a low value easily achieved at the microwave frequency. The reference difference signal resulting is consequently of too low a frequency but is multiplied up in a phase lock loop by phase comparison with the divided output of a voltage controlled oscillator. The oscillator output itself then provides the reference signal of suitably high frequency.

The term 'target' has been used in this specification to denote the reflecting object but this does not of course necessarily imply any military significance. In fact a prime application of the invention is in the determination of the topography of a coal mine and the control of automated mining operations.

It will be seen that the invention provides an FMCW ranging system in which compensation for non-linearities in the frequency modulation rate is achieved. The method of compensation remains effective in the presence of multiple returns and also when the signal to noise ratio is low.

**Claims**

1. A radar ranging system comprising a swept frequency transmitter (1, 2), difference-frequency circuit means (3) for generating a target difference-frequency signal having frequency components corresponding to the frequency differences between the transmitted signal and respective target return signals, and means (9, 11, 13, 14) for generating a reference difference signal of frequency proportional to the instantaneous frequency difference between the transmitted signal and a version thereof delayed by a predetermined period, characterised in that sampling means (16) clocked by said reference difference signal are arranged to sample said target difference-frequency signal at a non-uniform rate and thereby compensate for non-linear frequency sweep, memory means (18) are coupled to said sampling means for storing the target difference-frequency signal samples and analysing means (7) are coupled to said memory means for analysing said samples on the basis of equal time intervals between them so as to determine the frequency components of the corresponding waveform and hence the true simultaneous ranges of a plurality of targets.

2. A radar ranging system according to Claim 1, including means (20) for producing an intermediate frequency (I.F.) signal from the outputs of the swept frequency transmitter (1, 2) and a microwave local oscillator (19), and a delay line (13) to which the I.F. signal is applied, the resulting delayed I.F. signal being differenced with the un-delayed I.F. signal to generate said reference difference signal.

3. A radar ranging system according to Claim 1, wherein said reference difference-frequency signal is provided by multiplication of the frequency of a first signal derived by differencing the transmitted signal with a time-displaced version thereof.

4. A radar ranging system according to Claim 3, wherein said multiplication is effected by a phase-locked loop having a controlled frequency input which is divided down to provide a signal the frequency of which is compared with that of said first signal to control said frequency input.

**Revendications**

1. Système de repérage radar, comprenant un émetteur (12) à balayage en fréquences, un circuit à fréquence différence (3) destiné à créer un signal à fréquence différence de la cible ayant des composantes de fréquences correspondant aux différences de fréquences entre le signal émis et des signaux respectifs d'échos de cibles, et un dispositif (9, 11, 13, 14) destiné à créer un signal différence de référence ayant une fréquence proportionelle à la différence instantanée de fréquences entre le signal émis et une version de celui-ci retardée d'une période prédéterminée, caractérisé en ce qu'un dispositif d'échantillonnage (16) déclenché par le signal différence de référence est destiné à échantillonner le signal fréquence différence de cible à une fréquence non uniforme et ainsi à compenser le balayage non linéaire en fréquences, une mémoire (18) est couplée au dispositif d'échantillonnage afin qu'elle conserve les échantillons du signal fréquence différence de cible, et un dispositif d'analyse (7) est couplé à la mémoire afin qu'il analyse les échantillons sur la base d'intervalles de temps égaux entre eux, afin qu'ils déterminent les composantes de fréquences de la forme d'onde correspondante et en conséquence les distances simultanées véritables de plusieurs cibles.

2. Système de repérage radar selon la revendication 1, comprenant un dispositif (20) destiné à former un signal à fréquence intermédiaire (I.F.) à partir des signaux de sortie de l'émetteur à balayage en fréquences (12) et un oscillateur local (19) en hyperfréquences, et une ligne à retard (13) à laquelle le signal à fréquence intermédiaire est appliqué, le signal retardé résultant à fréquence intermédiaire subissant une opération différence avec le signal non retardé à fréquence intermédiaire afin que le signal différence de référence soit formé.

3. Système de repérage radar selon la revendication 1, dans lequel le signal fréquence différence de référence est formé par multiplication de la fréquence d'un premier signal dérivé par formation de la différence entre le signal émis et une version de celui-ci décalée dans le temps.

4. Système de repérage radar selon la revendication 3, dans lequel la multiplication est effectuée par une boucle à verrouillage de phase ayant une entrée à fréquence réglée qui est divisée afin qu'elle forme un signal dont la fréquence est comparée à celle dudit premier signal afin que l'entrée en fréquences soit réglée.

**Patentansprüche**

1. Radarentfernungsmeßsystem mit einem Wobbelsender (12), Differenzfrequenzschaltungsmitteln (3) zum Erzeugen eines Zieldifferenzfrequenzsignals mit den Frequenzdifferenzen zwischen dem Sendesignal und den jeweiligen Ziel-Echo-Signalen entsprechenden Frequenzkomponenten und Mitteln (9, 11, 13, 14) zum Erzeugen eines Bezugzdifferenzsignals mit einer Frequenz, die der Augenblicksdifferenzfrequenz zwischen dem Sendesignal und einer um eine vorbestimmte Periode verzögerte Version desselben proportional ist, dadurch gekennzeichnet, daß durch das Bezugsdifferenzsignal taktgesteuerte Abtastmittel (16) zum Abtasten des Ziel-Differenzfrequenzsignals mit ungleichförmiger Folgefrequenz, um dadurch eine nichtlineare Frequenzänderung bei Wobbeln zu kompensieren, vorgesehen sind, daß Speichermittel (18) zum Speichern der Zieldifferenzfrequenzsignal-Abtastwerte an die Abtastmittel angeschlossen sind und daß Analysiermittel (7) an die Speichermittel Analysieren der Abtastwerte auf der Basis gleicher Zeitintervalle zwischen ihnen angeschlossen sind, so daß die Frequenzkomponenten der entsprechenden Wellenform und mithin die wahren Augenblicksentfernungen mehrerer Ziele bestimmt werden.

2. Radarentfernungsmeßsystem nach Anspruch 1 mit Mitteln (20) zum Erzeugen eines Zwischenfrequenzsignals aus den Ausgangssignalen des Wobbelsenders (12) und eines Mikrowellenempfängeroszillators (19) und einer Verzögerungsleitung (13), der das Zwischenfrequenzsignal zugeführt wird, wobei die Differenz zwischen der resultierenden verzögerten Zwischenfrequenzsignal und dem unverzögerten Zwischenfrequenzsignal ermittelt wird, um das Bezugsdifferenzsignal zu erzeugen.

3. Radarentfernungsmeßsystem nach Anspruch 1, bei dem das Bezugsdifferenzfrequenzsignal durch Vervielfachung der Frequenz eines ersten Signals gebildet wird, das durch Ermittlung der Differenz zwischen de Sendesignal und einer zeitverschobenen Version desselben abgeleitet wird.

4. Radarentfernungsmeßsystem nach Anspruch 3, bei dem die Vervielfachung durch einen phasenstarren Frequenzregelkreis bewirkt wird, der eine geregelte Eingangsfrequenz hat, das heruntergeteilt wird, um ein Signal zu bilden, dessen Frequenz mit der des ersten Signals verglichen wird, um die Eingangsfrequenz zu regeln.

# Fig.1(a)

# Fig.1(b)

Fig.2.

FIXED DELAY LINE — 13

11

9

ANTENNA

1

TUNABLE MICROWAVE OSCILLATOR

MIXER — 14

3

6

TARGET SIGNALS

REFERENCE SIGNAL

4

RAMP GENERATOR

MIXER

5

AMPLIFY AND HARD LIMIT — 15

2

SAMPLE AND HOLD

16

CLOCK

BUFFER STORE — 18

FREQUENCY ANALYSER — 7

FIXED MICROWAVE OSCILLATOR

19

MIXER

20

FIXED DELAY LINE — 13

11

Fig.3.

MIXER — 14

1

ANTENNA

TUNABLE MICROWAVE OSCILLATOR

3

4

RAMP GENERATOR

MIXER

REFERENCE SIGNAL

2

TARGET SIGNALS